# FASCICULE DE BREVET EUROPEEN

(11) **EP 0 767 081 B1**
(45) Date de publication et mention de la délivrance du brevet: **05.12.2001**
(21) Numéro de dépôt: 95402232.3
(22) Date de dépôt: 06.10.1995
(51) Int. Cl.: B60H 1/20, F01P 11/02, B60H 1/02

(54) **Dispositif de récupération de la chaleur des gaz d'échappement d'un véhicule**
Wärmerückgewinnungsanlage aus Fahrzeugabgasen
Device for the recovery of heat from the exhaust gases of a vehicle

(43) Date de publication de la demande: 09.04.1997
(73) Titulaire: ACOTECH, 78190 Trappes (FR); AUTOMOBILES PEUGEOT, 75761 Paris Cedex 16 (FR); AUTOMOBILES CITROEN, 92200 Neuilly-sur-Seine (FR)
(72) Inventeur: Robin, Roger, F-78990 Elancourt (FR)
(74) Mandataire: Seytre, Françoise

(56) Documents cités:
- EP-A- 0 189 624
- EP-A- 0 496 942
- DE-A- 2 551 911
- FR-A- 687 423
- FR-A- 2 718 491
- US-A- 1 986 893

## Description

L'invention concerne un dispositif permettant de récupérer la chaleur des gaz d'échappement des véhicules automobiles et de la restituer soit au système de chauffage de l'habitacle desdits véhicules, soit au circuit de refroidissement de leur moteur.

L'amélioration du rendement des moteurs thermiques des véhicules automobiles tend à réduire les pertes thermiques vers le circuit de refroidissement.

De cette réduction des pertes résulte, en particulier, une montée en température plus lente du moteur, ce qui entraîne un fonctionnement prolongé en conditions défavorables. D'autre part, cette situation prive le système de chauffage de l'habitacle, qui puise l'énergie qui lui est nécessaire sur le circuit de refroidissement, de l'apport thermique suffisant pour assurer une montée en température rapide.

Pour transférer de l'énergie depuis un circuit de gaz d'échappement chauds, vers un circuit de fluide à plus basse température, il est connu d'utiliser un fluide intermédiaire à changement de phase, tel que de l'eau. Ce fluide est vaporisé, par échange thermique avec les gaz d'échappement, dans un échangeur vaporiseur, et condensé, dans un échangeur condenseur, au contact du fluide à réchauffer.

Un tel dispositif est décrit, par exemple, dans le document EP-B-189 624. Le dispositif décrit dans ce document comporte un dispositif d'absorption de la chaleur placé dans le conduit d'échappement d'un véhicule et un dispositif de restitution de la chaleur disposé dans le conduit de chauffage de l'habitacle dudit véhicule. Ces deux dispositifs sont reliés par un circuit de passage de la vapeur circulant du dispositif d'absorption au dispositif de restitution de la chaleur et un circuit de retour du liquide condensé placé entre un collecteur de ce liquide, disposé au-dessous de la partie de restitution de la chaleur, et le dispositif d'absorption de la chaleur. Ce circuit de retour comporte en outre une valve permettant de régler la quantité de fluide renvoyée vers ledit dispositif d'absorption, en fonction de la température de l'air en aval du dispositif de restitution de la chaleur. Il est ainsi possible de réguler l'apport de calories en provenance de l'échappement en fonction des besoins du système de chauffage.

Toutefois, on remarquera que l'énergie véhiculée par les gaz d'échappement d'un moteur thermique de véhicule automobile est très variable en fonction de la charge mécanique appliquée audit moteur. D'autre part, les besoins en récupération d'énergie n'ont pas de corrélation avec les disponibilités énergétiques sur les gaz d'échappement.

Le fonctionnement du circuit de fluide biphasique, tel que décrit plus haut, suppose qu'à tout instant s'établisse un parfait équilibre entre la puissance transmise au fluide en ébullition par les gaz d'échappement et la puissance évacuée par le condenseur vers le système à réchauffer.

Dans le cas contraire, le système connaîtrait des variations importantes de pression de vapeur : baisse de pression pouvant aller jusqu'à l'arrêt de fonctionnement du système dès que le niveau énergétique des gaz d'échappement ne serait plus suffisant pour maintenir la température d'ébullition, élévation de la pression pouvant conduire à la destruction du dispositif en cas de disponibilité importante d'énergie dans le circuit des gaz d'échappement dépassant les besoins en énergie de récupération.

La régulation selon le document antérieur EP-B-189 624 ne permet pas de résoudre ce problème puisqu'elle n'agit qu'en fonction de la température du circuit de chauffage de l'habitacle et ne peut prendre en compte l'état du circuit des gaz d'échappement. C'est pourquoi ce document prévoit un dispositif annexe permettant de dévier le flux des gaz d'échappement de façon à éviter le dispositif d'absorption de la chaleur. Ce procédé est, d'une part complexe, et d'autre part, en agissant directement sur le flux des gaz d'échappement il risque de perturber celui-ci.

La présente invention a pour but de remédier aux inconvénients précédemment décrits et de conférer ainsi au système une parfaite sécurité d'emploi et une constante adaptation de la puissance échangée aux besoins instantanés en énergie de récupération.

A cet effet, elle a pour objet un dispositif permettant de récupérer la chaleur des gaz d'échappement d'un véhicule automobile, circulant dans un élément de canalisation, et de la restituer à un circuit de fluide à plus basse température dudit véhicule du type constitué par un circuit fermé contenant un fluide intermédiaire caloporteur et comportant un échangeur vaporiseur, en contact thermique avec les gaz d'échappement et un échangeur condenseur, en contact thermique avec le fluide à réchauffer, reliés par des conduits de circulation du fluide caloporteur en phase vapeur et/ou liquide.

Le dispositif comporte, selon l'invention, une chambre annulaire, formant échangeur vaporisateur, entourant l'élément de canalisation dans laquelle circulent les gaz d'échappement ainsi qu'une capacité déformable sous l'effet de la pression montée débouchante en un point bas dudit circuit. Ladite capacité est d'une contenance suffisante pour recevoir, à l'état actif, au moins une partie du fluide caloporteur contenu dans le circuit fermé, lorsque le système est en état de déséquilibre énergétique.
Selon d'autres caractéristiques et variantes de l'invention :
- La capacité déformable est raccordée en partie basse de l'échangeur vaporisateur.
- La capacité déformable est raccordée en partie basse d'un siphon formé dans le canal de récupération des condensats en sortie de l'échangeur condenseur.
- la capacité déformable est tarée par un ressort placé entre le fond de ladite capacité et un élément de la structure du véhicule.
- L'échangeur condenseur comporte une boîte de récupération des condensats séparée en deux chambres par une membrane déformable qui présente un profil dont la convexité est orientée, en situation d'équilibre énergétique du système, en direction de la chambre supérieure. Ladite chambre joue le rôle de capacité déformable et comporte, en partie haute, le canal de retour du fluide condensé vers l'échangeur vaporiseur, et reçoit les condensats issus de l'échangeur condenseur.
- La chambre supérieure de la boîte de récupération des condensats est remplie d'une matière capable de retenir le liquide accumulé dans ladite chambre tant que la membrane reste soumise à l'influence de la pression.
- L'échangeur condenseur est un radiateur disposé dans le flux d'air de chauffage de l'habitacle du véhicule automobile.
- L'échangeur condenseur est installé sur une conduite du circuit de refroidissement du moteur du véhicule automobile.
- L'élément de canalisation dans lequel circulent les gaz d'échappement fait partie de la ligne d'échappement du véhicule automobile.
- L'élément de canalisation dans lequel circulent les gaz d'échappement fait partie du conduit permettant de réintroduire ces gaz d'échappement dans le conduit d'admission du moteur.

D'autres caractéristiques et avantages de l'invention apparaîtront à la lecture de la description détaillée qui va suivre, pour la compréhension de laquelle on se reportera aux dessins annexés, dans lesquels :
- La figure 1 est une vue schématique du dispositif selon l'invention, représenté dans trois états caractéristiques de fonctionnement,
- La figure 2, 3 et 4 sont des vues semblables à la figure 1 montrant trois variantes de réalisation de l'invention,
- La figure 5 est une vue schématique du dispositif selon l'invention utilisant une variante de l'échangeur de chaleur destiné à la condensation du fluide.

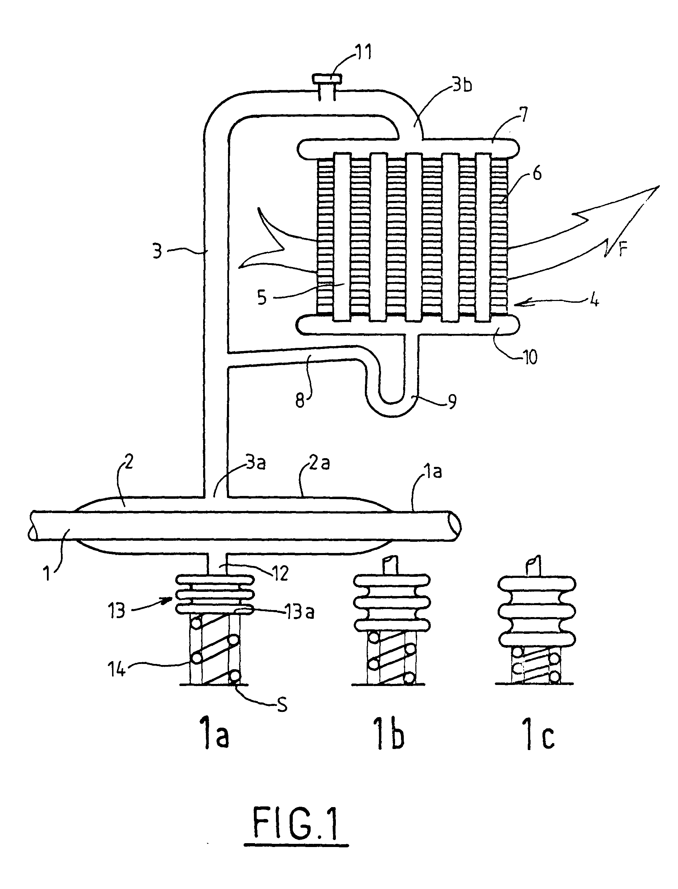

Sur la figure 1, est représenté un élément 1 de canalisation dans laquelle circulent les gaz d'échappement d'un moteur de véhicule automobile. Cet élément 1 est entouré par une chambre annulaire formant une enceinte étanche 2 dont la paroi 2ₐ est, par exemple soudée sur la paroi externe 1ₐ de l'élément de canalisation. Un conduit 3 débouche par l'une de ses extrémités 3ₐ dans ladite chambre annulaire 2 et par son autre extrémité 3_{b} dans l'une des boîtes à eau 7 d'un radiateur 4. Ce radiateur comporte, de façon classique, un faisceau de tubes 5 garnis d'ailettes 6 et branchés entre la boîte à eau 7 et une seconde boîte à eau 10. Cette deuxième boîte à eau est raccordée au conduit 3 par un canal 8 muni d'un siphon 9.

Ce radiateur est, par exemple, installé dans le flux d'air F du conduit de chauffage (non représenté) de l'habitacle du véhicule.

Selon l'invention, le dispositif comporte encore une capacité déformable 13 raccordée par un conduit 12 à la chambre étanche 2 entourant le conduit d'échappement. Un ressort 14 est placé en appui entre la paroi 13ₐ de la capacité opposée à l'entrée du conduit 12 et un élément S de la structure du véhicule. Ledit ressort est agencé de façon à s'opposer à l'expansion de la capsule.

L'ensemble ainsi constitué clos et étanche contient une faible quantité d'un fluide biphasique, par exemple de l'eau qui peut être additionnée d'un agent (alcool, glycol, notamment) capable de prévenir sa congélation.

Dans un premier temps, le système étant à l'arrêt en l'absence de circulation de gaz d'échappement, le fluide contenu dans la chambre annulaire 2 est froid et la pression relative dans l'enceinte est nulle, voire même négative. Dans ces conditions (figure 1a), la capacité 13 se trouve comprimée, sous l'action du ressort 14 et la plus grande partie du liquide qu'elle est susceptible de contenir se trouve refoulée dans la chambre 2.

Lorsque le moteur thermique est en fonctionnement, les gaz d'échappement pénètrent dans la canalisation 1 à haute température et tendent à réchauffer le liquide contenu dans la chambre 2 et à l'amener à une température suffisante pour créer l'ébullition.

Cette température d'ébullition, pour un fluide déterminé, dépend de la pression régnant dans l'enceinte où elle se produit. Un vide plus ou moins poussé obtenu en extrayant, par le clapet 11, avant fermeture du circuit, l'air contenu dans le dispositif, permet d'abaisser cette température.

Parvenu à sa température d'ébullition, le fluide se vaporise et sa vapeur se dégage vers la partie haute de la chambre 2. Cette vapeur est ensuite amenée, par le conduit 3, jusqu'au radiateur 4. La vapeur baigne alors les tubes 5 de cet échangeur à qui elle transmet sa chaleur latente de vaporisation, laquelle est restituée, par les ailettes 6, à l'air qui circule à travers le radiateur.

Sous l'effet de cet échange de chaleur, la vapeur se condense le long de la paroi interne des tubes 5 et le liquide provenant de cette condensation finit par s'écouler le long desdits tubes puis, de là, dans la boîte à eau 10 avant de retourner, par simple gravité, vers la chambre annulaire 2 en circulant dans le canal 8 et, à contre-courant par rapport à la vapeur, dans le conduit de liaison 3.

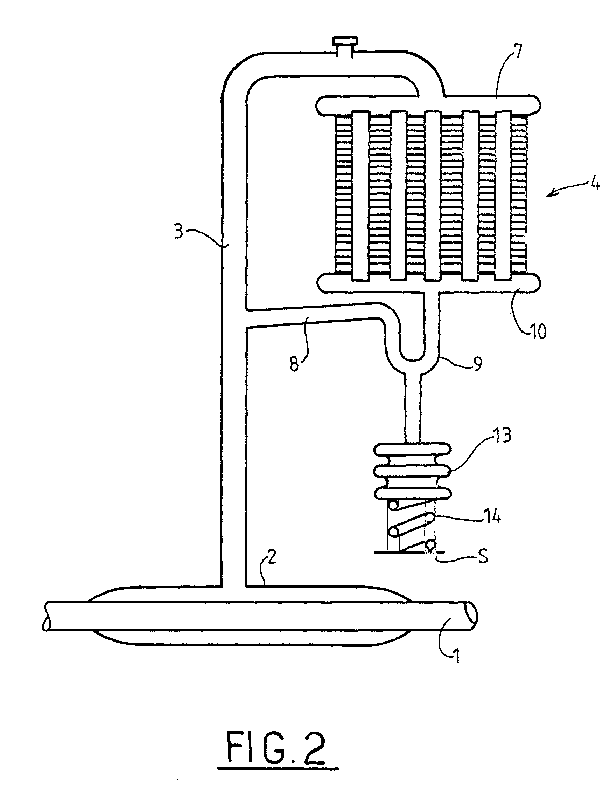

Ce mode de fonctionnement se poursuit tant que la pression dans l'enceinte reste modérée et inférieure à la pression de tarage du ressort 14. Dés que cette pression dépasse la limite de tarage dudit ressort, son action sur la face inférieure de la capacité 13 tend à déformer cette dernière et à accroître son volume (figure 2b). Dans ce cas, une certaine quantité de liquide se trouve prélevée dans la chambre 2 de vaporisation, pour pénétrer dans le la capacité déformable, par le conduit 12.

Le niveau de liquide contenu dans la chambre annulaire 2 s'abaisse alors, réduisant la surface mouillée active d'échange avec les gaz d'échappement circulant dans la tubulure 1.

De cette diminution de surface active résulte une réduction de l'énergie prélevée sur les gaz. A son tour, cette réduction de l'énergie récupérée tend à faire baisser la pression dans l'enceinte et ceci jusqu'au rétablissement de l'équilibre entre la puissance absorbée sur les gaz d'échappement et la puissance cédée au circuit d'utilisation.

Si l'accroissement du déséquilibre entre ces deux puissances devait se poursuivre, la pression dans l'enceinte tendrait encore à s'élever et entraînerait une déformation de plus en plus importante de la capacité 13 et la compression du ressort de tarage 14 jusqu'à ce que la totalité du fluide contenu dans le circuit se retrouve dans la capacité déformable.

En cette condition extrême, par manque de fluide à vaporiser, le système s'arrêterait de fonctionner jusqu'à ce que, la pression dans l'ensemble s'étant abaissée, la capacité 13 restitue à la chambre de vaporisation une quantité de fluide suffisante pour permettre au cycle normal de reprendre.

Dans ces conditions, on peut voir que le système tend de manière automatique à fonctionner à pression de vapeur constante, quelle que soit l'énergie disponible sur les gaz d'échappement et quelle que soit la dissipation vers le circuit récupérateur.

Le système assure ainsi, en plus d'une parfaite adaptation aux besoins de puissance échangée, une totale sécurité de fonctionnement. En effet, en aucun cas la pression de vapeur ne peut s'élever dans l'enceinte au- delà de la pression de tarage du ressort compensateur.

Dans le mode de réalisation de l'invention représenté sur la figure 2, la capacité déformable 13 est raccordée en partie basse du siphon 9 formé dans le canal 8 de récupération des condensats branché sur la boîte à eau 10 de sortie du radiateur 4. Comme précédemment l'expansion de la capacité 13 est limitée par le ressort de tarage 14, en appui sur un élément S de la structure.

Dans cette configuration la capacité déformable, bien que ne se raccordant plus au point bas du dispositif, permet d'accumuler une partie plus ou moins grande du liquide condensé, en fonction de la pression régnant dans l'enceinte fermée, en récupérant ce liquide dès la sortie de l'élément de condensation.

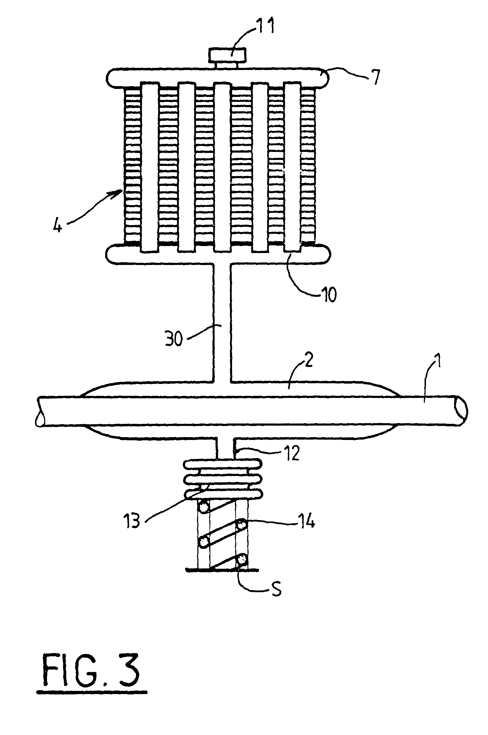

La figure 3 présente une variante simplifiée du mode de réalisation de la figure 1. Dans cette configuration, un seul conduit 30 assure à la fois l'acheminement des vapeurs issues de la chambre annulaire 2 vers le radiateur 4 et le retour du fluide condensé dans ledit radiateur vers la chambre 2. Dans ce cas, le conduit 30 est branché entre la boîte à eau 10 de sortie du radiateur 4 et ladite chambre de vaporisation 2.

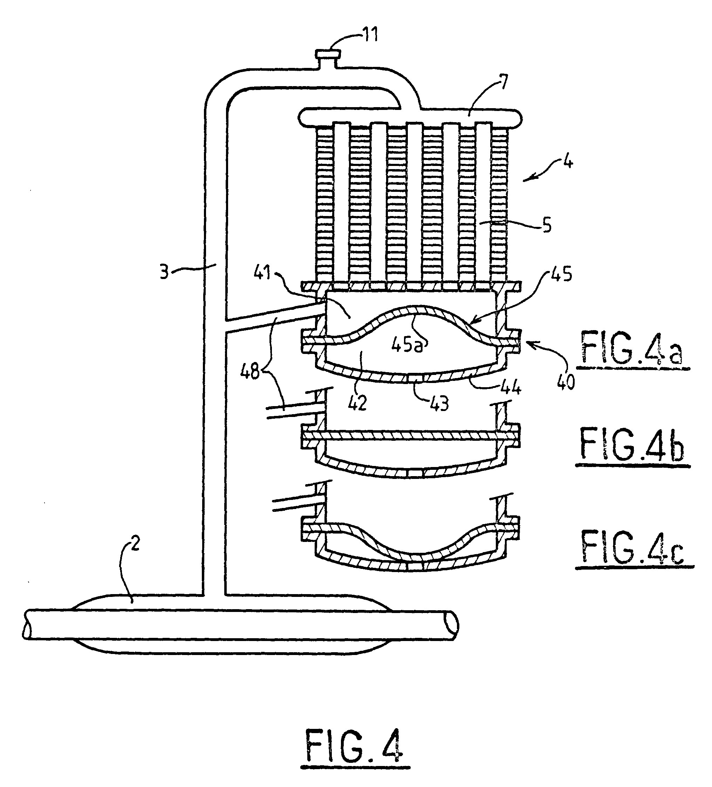

Dans le mode de réalisation représenté figure 4, la capacité déformable est intégrée à la boîte à eau de sortie du radiateur. Pour ce faire, ladite boîte à eau 40 est séparée en deux chambres 41, 42 par une membrane déformable 45. Le canal 48 de retour du fluide condensé est branché, d'un côté, sur le conduit 3 d'acheminement des vapeurs, ainsi que précédemment, et de l'autre côté en partie haute de la chambre supérieure 41. C'est également dans cette chambre que débouche le faisceau des tubes 5 du radiateur. La chambre inférieure 42 est délimitée par la cloison 45 et par la paroi inférieure 44 de la boîte à eau 40. Cette paroi 44 est percée d'un orifice 43 de mise à l'air libre de la chambre précitée.

Initialement, la membrane 45 présente un profil dont la convexité 45ₐ est orientée en direction de la chambre supérieure 41, de façon à réduire le volume interne de ladite chambre. Tant que les apports calorifiques récupérés sur les gaz d'échappement se trouvent entièrement absorbés par l'échangeur condenseur, les condensats retournant vers l'enceinte annulaire 2 circulent à travers le canal 48 et le conduit 3.

Lorsque la disponibilité d'énergie dans le circuit des gaz d'échappement devient supérieure à l'énergie dissipée par le radiateur 4, la température du fluide caloporteur tend à s'élever entraînant une élévation de pression dans le circuit et, notamment, dans la chambre 41. Cette pression se trouve transmise directement à la membrane 45.

Sous l'influence de cette augmentation de pression, la membrane 45 se déforme progressivement, comme représenté aux figures 4b et 4c. A la fin de cette déformation, la convexité 45ₐ de ladite membrane est tournée vers la paroi inférieure 43 de la boîte 40. Le volume de la chambre inférieure 41 est ainsi augmenté et forme une capacité de rétention dont le niveau est situé en dessous de l'embouchure du canal 48 de sortie de l'échangeur. De la sorte, les condensats produits dans cet échangeur viennent en priorité s'accumuler dans le volume ainsi créé, au lieu de retourner vers l'enceinte annulaire.

Lorsque le système sera de nouveau en équilibre énergétique, l'abaissement de la température et donc de la pression dans le circuit réduira les contraintes exercées sur la membrane 45. Celle-ci reprendra progressivement sa forme initiale, refoulant le liquide vers le haut de la chambre 41, en direction du canal de sortie 48.

Dans ce mode de réalisation et pour tenir compte des forces induites par le déplacement du véhicule, la chambre supérieure 41 peut être remplie d'une matière capable de retenir le liquide accumulé dans ladite chambre tant que la membrane 45 reste soumise à l'influence de la pression.

Les exemples de réalisation décrits jusqu'ici se réfère à des applications de l'invention destinées à réchauffer l'air de l'habitacle d'un véhicule. Comme on l'a déjà dit, le dispositif est également utilisable pour réchauffer le circuit de refroidissement du moteur de ce véhicule et permettre ainsi une montée en température plus rapide de ce dernier.

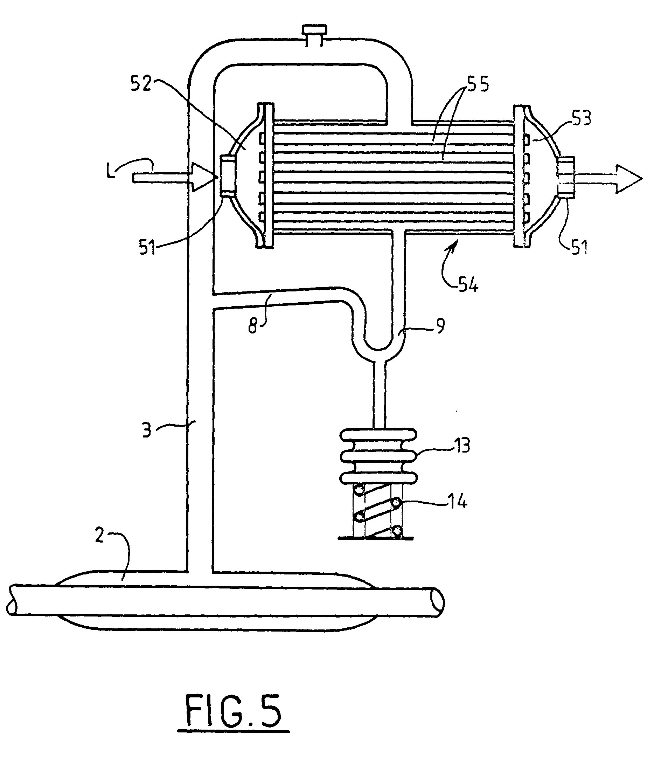

Un exemple d'un tel agencement est fourni figure 5. On voit que le circuit est fondamentalement identique à celui de la figure 1, seul l'échangeur condenseur est différent. En effet, il s'agit ici de céder l'énergie prélevée sur les gaz d'échappement non plus à un fluide gazeux mais à un liquide. L'échangeur 54 est donc installé sur une conduite 51 du circuit de refroidissement du moteur. Le liquide de refroidissement L circule dans des tubes 55 installés entre la boîte d'entrée d'eau 52 et la boîte de sortie 53. La vapeur en provenance de l'enceinte annulaire 2 est directement envoyée en partie haute de l'échangeur, elle circule entre les tubes 5, et ressort en partie basse de l'échangeur. Le fonctionnement du système est, par ailleurs, identique aux cas précédents.

Bien entendu ce type d'échangeur peut être utilisé avec n'importe laquelle des variantes précédentes.

L'élément de canalisation 1 autour duquel est installé l'enceinte annulaire 2 peut-être une partie de la ligne d'échappement du véhicule ou bien encore une partie du conduit de recyclage des gaz d'échappement dont une certaine quantité est réintroduite dans le conduit d'admission en vue de réduire le rejet des gaz nocifs dans l'atmosphère.

Cette deuxième solution est doublement avantageuse. En effet, le système de recyclage des gaz est déjà pourvu de moyens permettant de l'interrompre lorsque le moteur est en pleine charge, ce qui diminue les risques de fonctionnement du dispositif selon des conditions extrêmes. D'un autre côté, l'installation du dispositif de récupération de l'énergie, en abaissant la température des gaz d'échappement recyclés permet d'augmenter leur quantité et, par conséquent, de diminuer la pollution du moteur.

D'autres variantes sont encore possibles sans sortir du cadre de la présente invention.

## Revendications

1. Dispositif permettant de récupérer la chaleur des gaz d'échappement d'un véhicule automobile, circulant dans un élément de canalisation (1), et de la restituer à un circuit de fluide à plus basse température dudit véhicule, ledit dispositif étant constitué par un circuit fermé contenant un fluide intermédiaire caloporteur et comportant un échangeur vaporiseur (2), en contact thermique avec les gaz d'échappement et un échangeur condenseur (4,54), en contact thermique avec le fluide à réchauffer, reliés par des conduits (3,30,8,48) de circulation du fluide caloporteur en phase vapeur et/ou liquide,
**caractérisé en ce qu'**il comporte une chambre annulaire (2) entourant l'élément de canalisation (1) et formant l'échangeur vaporisateur, ainsi qu'une capacité (13, 41) déformable sous l'effet de la pression et montée débouchante en un point bas du circuit, cette capacité étant d'une contenance suffisante pour recevoir, à l'état actif, au moins une partie du fluide caloporteur contenu dans le circuit fermé, lorsque le système est en état de déséquilibre énergétique.

2. Dispositif selon la revendication 1,
**caractérisé en ce que** la capacité déformable (13) est raccordée en partie basse de l'échangeur vaporisateur (2).

3. Dispositif selon la revendication 1,
**caractérisé en ce que** la capacité déformable (13) est raccordée en partie basse d'un siphon (9) formé dans le canal (8) de récupération des condensats en sortie de l'échangeur condenseur (4).

4. Dispositif selon l'une des revendications précédentes,
**caractérisé en ce que** la capacité déformable (13) est tarée par un ressort (14) placé entre le fond (13ₐ) de ladite capacité et un élément (S) de la structure du véhicule.

5. Dispositif selon la revendication 1,
**caractérisé en ce que** l'échangeur condenseur (4) comporte une boîte de récupération des condensats (40) séparée en deux chambres (41,42) par une membrane déformable (45) qui présente un profil dont la convexité (45ₐ) est orientée, en situation d'équilibre énergétique du système, en direction de la chambre supérieure (41) laquelle joue le rôle de capacité déformable et comporte, en partie haute, le canal (48,3) de retour du fluide condensé vers l'échangeur vaporiseur (2), et reçoit les condensats issus de l'échangeur condenseur (4).

6. Dispositif selon la revendication 5,
**caractérisé en ce que** la chambre supérieure (41) de la boîte de récupération des condensats (40) est remplie d'une matière capable de retenir le liquide accumulé dans ladite chambre tant que la membrane (45) reste soumise à l'influence de la pression.

7. Dispositif selon l'une des revendications précédentes,
**caractérisé en ce que** l'échangeur condenseur (4) est un radiateur disposé dans le flux d'air de chauffage de l'habitacle du véhicule automobile.

8. Dispositif selon l'une des revendications précédentes,
**caractérisé en ce que** l'échangeur condenseur (4) est installé sur une conduite (51) du circuit de refroidissement du moteur du véhicule automobile.

9. Dispositif selon l'une des revendications précédentes,
**caractérisé en ce que** l'élément de canalisation (1) dans lequel circulent les gaz d'échappement fait partie de la ligne d'échappement du véhicule automobile.

10. Dispositif selon l'une des revendications 1 à 8,
**caractérisé en ce que** l'élément de canalisation (1) dans lequel circulent les gaz d'échappement fait partie du conduit permettant de réintroduire ces gaz d'échappement dans le conduit d'admission du moteur.

## Patentansprüche

1. Vorrichtung zur Rückgewinnung der Wärme aus Abgasen eines Kraftfahrzeugs, die in einem Leitungselement (1) zirkuliert, und zur Rückgabe an einen Fluid-Kreis des Fahrzeugs mit niedrigerer Temperatur, wobei die Vorrichtung von einem geschlossenen Kreis gebildet wird, der ein Wärmeübertragungsfluid und einen Verdampfer-Tauscher (2) in thermischem Kontakt mit den Abgasen und einen Kondensator-Tauscher (4, 54) des Fahrzeugs in thermischem Kontakt mit dem zu erhitzenden Fluid aufweist, die durch Leitungen (3, 30), (8, 48) verbunden sind, in denen das Wärmeübertragungsfluid in der Dampf- und/oder Flüssigkeitsphase zirkuliert,
**dadurch gekennzeichnet, dass** sie eine ringförmige Kammer (2) aufweist, die das Leitungselement (1) umgibt und den Verdampfer-Tauscher bildet, sowie einen Raum (13, 41), der unter Einwirkung des Drucks verformbar ist und in einen niedrigen Punkt des Kreises mündend befestigt ist, wobei der Raum ein ausreichend großes Fassungsvermögen besitzt, um im aktiven Zustand mindestens einen Teil des im geschlossenen Kreis enthaltenen Wärmeübertragungsfluids aufzunehmen, wenn sich das System im Zustand energetischen Ungleichgewichts befindet.

2. Vorrichtung nach Anspruch 1, **dadurch gekennzeichnet, dass** der verformbare Raum (13) im unteren Abschnitt mit dem Verdampfer-Tauscher (2) verbunden ist.

3. Vorrichtung nach Anspruch 1, **dadurch gekennzeichnet, dass** der verformbare Raum (13) mit dem unteren Abschnitt eines Siphons (9) verbunden ist, das im Kanal (8) zur Rückgewinnung der Kondensate am Ausgang des Kondensator-Tauschers (4) gebildet wird.

4. Vorrichtung nach einem der vorhergehenden Ansprüche, **dadurch gekennzeichnet, dass** der verformbare Raum (13) von einer Feder (14) austariert wird, die zwischen dem Boden (13ₐ) des Raums und einem Element (S) des Fahrzeugaufbaus angeordnet ist.

5. Vorrichtung nach Anspruch 1, **dadurch gekennzeichnet, dass** der Kondensator-Tauscher (4) einen Behälter (40) zur Rückgewinnung der Kondensate umfasst, der von einer verformbaren Membran (45) in zwei Kammern (41, 42) unterteilt wird, wobei die Membran ein Profil aufweist, dessen konvexe Form (45ₐ) im Zustand energetischen Gleichgewichts des Systems in Richtung der oberen Kammer (41) ausgerichtet ist, welche die Rolle des verformbaren Raums spielt und im oberen Bereich den Kanal (48, 3) zur Rückleitung des kondensierten Fluids zum Verdampfer-Tauscher (2) aufweist und die vom Kondensator-Tauscher (4) stammenden Kondensate aufnimmt.

6. Vorrichtung nach Anspruch 5, **dadurch gekennzeichnet, dass** die obere Kammer (41) des Behälters (40) zur Rückgewinnung der Kondensate mit einem Material gefüllt ist, das die in der Kammer angesammelte Flüssigkeit zurückhalten kann, solange die Membran (45) mit Druck beaufschlagt ist.

7. Vorrichtung nach einem der vorhergehenden Ansprüche, **dadurch gekennzeichnet, dass** der Kondensator-Tauscher (4) ein Radiator ist, der im Luftstrom der Heizluft des Fahrgastraums des Kraftfahrzeugs angeordnet ist.

8. Vorrichtung nach einem der vorhergehenden Ansprüche, **dadurch gekennzeichnet, dass** der Kondensator-Tauscher (4) an einer Leitung (51) des Kühlkreises des Motors des Kraftfahrzeugs installiert ist.

9. Vorrichtung nach einem der vorhergehenden Ansprüche, **dadurch gekennzeichnet, dass** das Leitungselement (1), in dem die Abgase zirkulieren, Teil der Abgasleitung des Kraftfahrzeugs ist.

10. Vorrichtung nach einem der Ansprüche 1 bis 8, **dadurch gekennzeichnet, dass** das Leitungselement (1), in dem die Abgase zirkulieren, Teil der Leitung ist, die die Abgase wieder in den Einlasskanal des Motors einleitet.

## Claims

1. Device making it possible to recover heat from the exhaust gases of a motor vehicle, circulating within a pipe member (1), and to restore said heat to a lower-temperature fluid system of said vehicle, said device being constituted by a closed circuit containing an intermediate heat-exchanging fluid and comprising an evaporator exchanger (2), in thermal contact with the exhaust gases, and a condenser exchanger (4, 54), in thermal contact with the fluid to be heated, connected by circulation conduits (3, 30) (8, 48) for the heat-exchanging fluid in vapour and/or liquid phase,
**characterised in that** it comprises an annular chamber (2) surrounding the pipe member (1) and forming the evaporator exchanger, together with a capacity (13, 41) deformable under the effect of pressure, and mounted so as to open out at a low point in the circuit, this capacity having a sufficient content to accommodate, in the active state, at least part of the heat-exchanging fluid contained in the closed circuit, when the system is in a state of energy imbalance.

2. Device according to Claim 1,
**characterised in that** the deformable capacity (13) is connected at the lower part of the evaporator exchanger (2).

3. Device according to Claim 1,
**characterised in that** the deformable capacity (13) is connected at the lower part of a siphon (9) formed in the condensate recovery channel (8) at the outlet of the condenser exchanger (4).

4. Device according to one of the preceding claims,
**characterised in that** the deformable capacity (13) is calibrated by a spring (14) placed between the bottom (13ₐ) of said capacity and an element (S) of the structure of the vehicle.

5. Device according to Claim 1,
**characterised in that** the condenser exchanger (4) has a condensate recovery box (40) separated into two chambers (41), (42) by a deformable membrane (45) that has a profile with a convexity (45ₐ) that is oriented, when there is energy balance in the system, to face the upper chamber (41), which chamber plays the role of deformable capacity and has, in its upper portion, the channel (48, 3) by which the condensed fluid returns to the vaporiser exchanger (2), and receives the condensates coming from the condenser exchanger (4).

6. Device according to Claim 5,
**characterised in that** the upper chamber (41) of the condensate recovery box (40) is filled with a material capable of retaining the liquid accumulated in said chamber for as long as the membrane (45) remains subject to the influence of pressure.

7. Device according to one of the preceding claims,
**characterised in that** the condenser exchanger (4) is a radiator arranged in the air flow for heating the passenger compartment of the motor vehicle.

8. Device according to one of the preceding claims,
**characterised in that** the condenser exchanger (4) is installed over a conduit (51) of the cooling system for the engine of the motor vehicle.

9. Device according to one of the preceding claims,
**characterised in that** the pipe member (1) within which the exhaust gases circulate forms part of the exhaust line of the motor vehicle.

10. Device according to one of Claims 1 to 8,
**characterised in that** the pipe member (1) within which the exhaust gases circulate forms part of the conduit allowing these exhaust gases to be reintroduced into the inlet conduit of the engine.
